# EUROPEAN PATENT SPECIFICATION

(11) **EP 2 610 947 B1**
(45) Date of publication and mention of the grant of the patent: **21.11.2018**
(21) Application number: 11820118.5
(22) Date of filing: 10.08.2011
(51) Int. Cl.: F16L 41/03, F16L 37/098, F16L 55/115, H01M 10/613, H01M 10/6568

(54) **BATTERY SYSTEM INCLUDING A MANIFOLD MEMBER AND A CONNECTION FITTING, AND MANIFOLD ASSEMBLY**
BATTERIESYSTEM MIT EINEM VERTEILERELEMENT UND EINEM VERBINDUNGSSTÜCK SOWIE VERTEILERANORDNUNG
SYSTÈME DE BATTERIE COMPRENANT UN ÉLÉMENT COLLECTEUR AINSI QU'UN ACCESSOIRE DE RACCORDEMENT, ET ENSEMBLE COLLECTEUR

(30) Priority: 23.08.2010 US 861381; 23.08.2010 US 861375
(43) Date of publication of application: 03.07.2013
(73) Proprietor: LG Chem, Ltd., Seoul 07336 (KR)
(72) Inventor: GADAWSKI, Thomas J., Michigan 48315 (US)
(74) Representative: Hoffmann Eitle
(86) International application number: PCT/KR2011/005822
(87) International publication number: WO 2012/026690

(56) References cited:
- WO-A2-2010/056750
- DE-U1- 29 901 962
- JP-A- 2000 002 388
- JP-A- 2002 089 769
- JP-A- 2004 183 761
- JP-A- 2006 266 341
- JP-A- 2009 085 289
- JP-U- S57 176 994
- JP-U- S63 171 797
- US-A- 2 550 591
- US-A- 2 949 205
- US-A- 4 706 737
- US-A- 5 046 765
- US-A- 5 318 332
- US-A1- 2007 087 266
- US-A1- 2008 299 446
- US-A1- 2009 325 051
- US-B1- 6 295 980
- US-B2- 6 666 263

## Description

### [TECHNICAL FIELD]

This application relates generally to a battery system and a manifold assembly therein. A manifold assembly is disclosed in document JP2004183761.

### [BACKGROUND ART]

Battery packs generate heat during usage. To prevent degradation of the battery packs, the battery packs should be cooled. However, existing devices utilized to cool the battery packs are not easily and quickly assembled and coupled to the battery packs.

### [DISCLOSURE]

### [TECHNICAL PROBLEM]

Accordingly, the inventor herein has recognized a need for an improved battery system and manifold assembly that eliminates and/or reduces the above mentioned deficiency.

### [TECHNICAL SOLUTION]

A manifold assembly in accordance with the present invention is defined in claim 1. The manifold assembly includes manifold members having an identical structure, each manifold member having a tubular wall with a first end and a second end. The tubular wall further includes an inner surface defining a first central aperture that extends from the first end to the second end. The tubular wall further includes a plurality of apertures extending therethrough. Each manifold member further includes a plurality of tubular port members disposed on the tubular wall over the plurality of apertures. Each manifold member further includes a first sealing member disposed on the inner surface proximate to the first end, and a male connecting portion extending from the second end. The manifold assembly further includes a connecting fitting having a tubular coupling portion, an abutment ring, and a tubular body. The abutment ring is disposed around an outer surface of the tubular coupling portion a predetermined distance from an end of the tubular coupling portion. The tubular coupling portion is configured to be removably coupled to the first end of a respective manifold member of the manifold members within the first central aperture such that the first sealing member of said manifold member contacts the outer surface of the tubular coupling portion and the abutment ring abuts against the first end of said manifold member. The tubular body of the connecting fitting is an arcuate-shaped tubular body. The tubular body of the connecting fitting has first and second circumferentially disposed ledges extending outwardly from an outer surface of the tubular body, the ledges being configured to removably engage an inner surface of a conduit to form a fluid-tight seal with the conduit. The manifold assembly further comprises an end cap configured to be removably coupled to the male connecting portion of another manifold member of the manifold members. The end cap comprises a circular-shaped body having an inner surface defining an aperture that extends into the circular-shaped body but not completely through the circular-shaped body; a second sealing member disposed on at least a portion of the inner surface of the circular-shaped body; and first and second finger portions extending in a first direction from the circular-shaped body configured to removably engage first and second notches, respectively, in the tubular wall of the respective manifold member, and the inner surface of the circular-shaped body is configured to receive the male connecting portion of the respective manifold member therein, and the second sealing member is configured to contact an outer surface of the male connecting portion.

A battery system in accordance with the present invention is defined in claim 10. The battery system includes a plurality of battery cells and a plurality of heat exchangers disposed adjacent to the plurality of battery cells. The battery system further includes the manifold assembly as described above. The manifold member fluidly communicates with the plurality of heat exchangers.

Optional and preferred features are defined in the dependent claims.

### [DESCRIPTION OF DRAWINGS]

FIG. 1 is a schematic of a portion of a battery system having a battery pack and a cooling system in accordance with an exemplary embodiment;
FIG. 2 is a block diagram of the battery system of FIG. 1;
FIG. 3 is an enlarged view of a portion of the battery system of FIG. 1
FIG. 4 is another enlarged view of a portion of the battery system of FIG. 1 illustrating battery cells and heat exchangers therein;
FIG. 5 is another enlarged view of a portion of the battery system of FIG. 1 illustrating battery cells therein;
FIG. 6 is a cross-sectional view of a portion of the battery system of FIG. 1 illustrating battery cells therein;
FIG. 7 is a schematic of first and second manifold members utilized in the cooling system of FIG. 1;
FIG. 8 is a schematic of the first manifold member of FIG. 7;
FIG. 9 is another schematic of the first manifold member of FIG. 8;
FIG. 10 is a cross-sectional view of the first manifold member of FIG. 8;
FIG. 11 is a schematic of a portion of a connecting assembly utilized in the battery system of FIG. 1;
FIG. 12 is a side view of the connecting assembly of FIG. 11 utilized in the battery system of FIG. 1 in accordance with another exemplary embodiment;
FIG. 13 is a rear view of the connecting assembly of FIG. 12;
FIG. 14 is a side view of a connecting fitting utilized in the connecting assembly of FIG. 12;

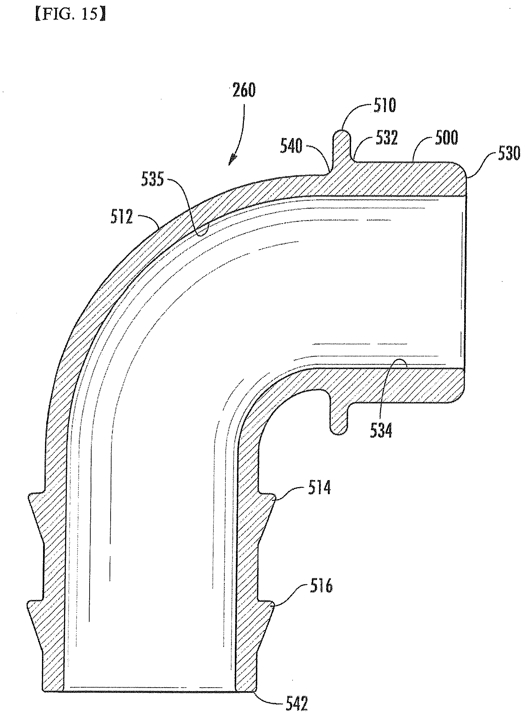

FIG. 15 is a cross-sectional view of a connecting fitting of FIG. 14;
FIG. 16 is another view of the connecting fitting of FIG. 14;
FIG. 17 is a schematic of a retaining member utilized in the connecting assembly of FIG. 11;
FIG. 18 is a rear view of the retaining member of FIG. 17;
FIG. 19 is a side view of the retaining member of FIG. 17;
FIG. 20 is an enlarged schematic of an end cap utilized in the battery system of FIG. 1 in accordance with another exemplary embodiment;
FIG. 21 is a cross-sectional view of the end cap of FIG. 20;
FIG. 22 is another view of the end cap of FIG. 20;
FIG. 23 is another cross-sectional view of the end cap of FIG. 20; and
FIG. 24 is a schematic of alternative first and second manifold members that could be utilized in the cooling system of FIG. 1.

### [BEST MODE]

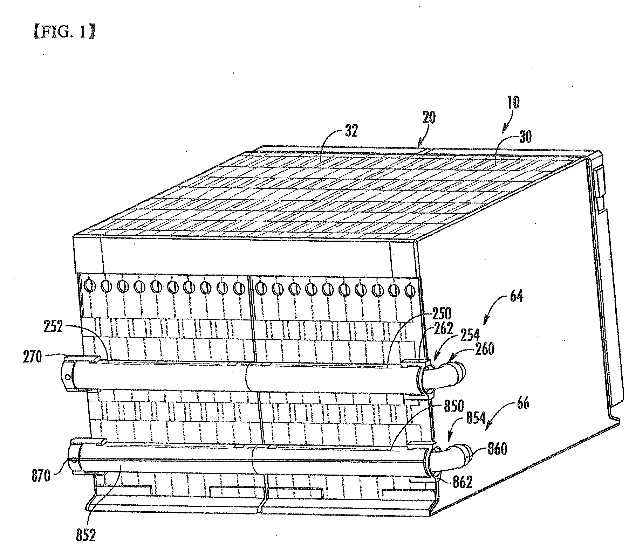

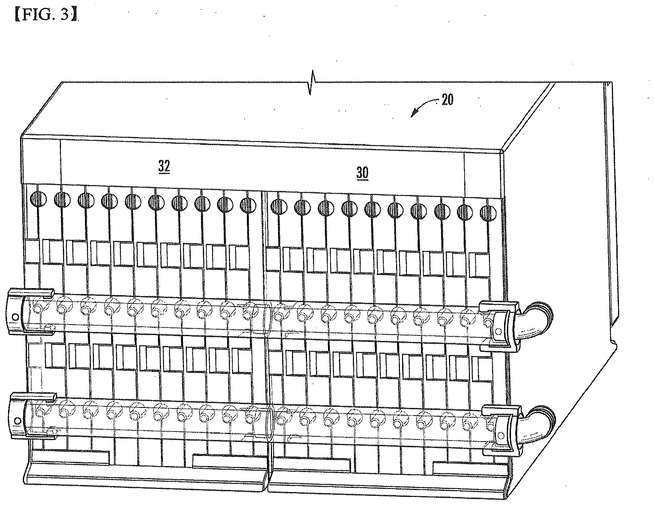

Referring to FIGS. 1-4, a battery system 10 in accordance with an exemplary embodiment is illustrated. The battery system 10 includes a battery pack 20 and a cooling system 22 for cooling the battery pack 20. The battery pack 20 includes battery modules 30, 32 having a plurality of heat exchangers therein for cooling battery cells in the battery modules 30, 32. A battery module is defined as at least two battery cells physically or electrically coupled together.

The cooling system 22 includes a reservoir 60, a pump 62, a manifold assembly 64, a manifold assembly 66, and conduits 68, 70, 72. The reservoir 60 holds a fluid therein. The pump 62 pumps the fluid from the reservoir 60 via the conduit 68. Thereafter, the pump 62 pumps the fluid through the conduit 70 into the manifold assembly 64. The fluid flows through the manifold assembly 64 into both a plurality heat exchangers in the battery module 30 and another plurality heat exchangers in the battery module 32. The manifold assembly 66 receives the heated fluid from the heat exchangers in the battery modules 30, 32 and routes the heated fluid through the conduit 72 back to the reservoir 60.

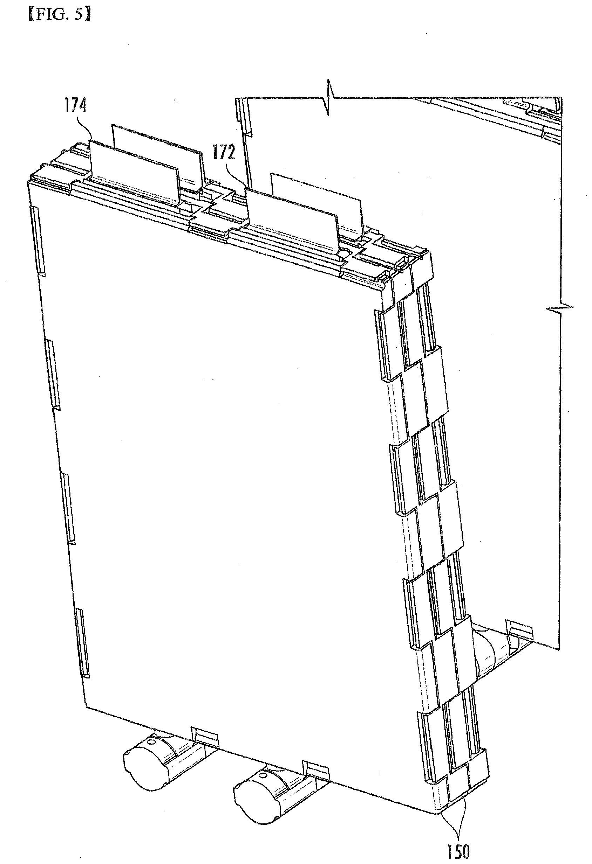

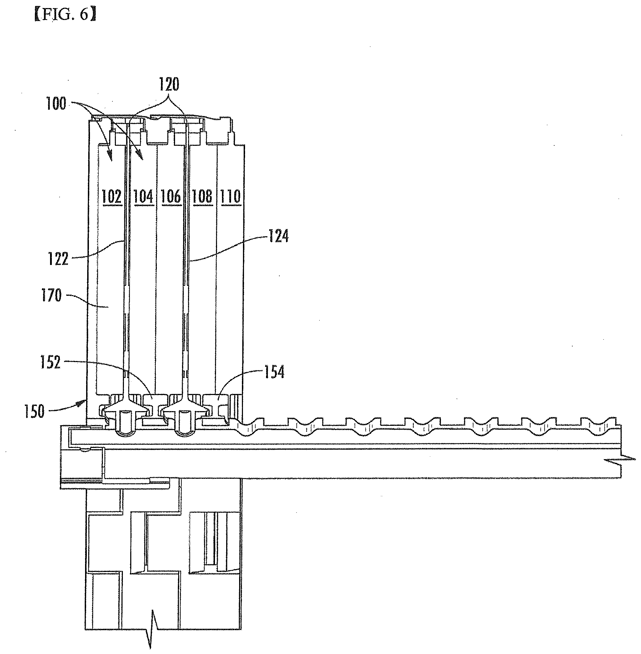

Referring to FIGS. 5 and 6, the battery module 32 is configured to output an operational voltage that can be utilized to energize a motor of an electric vehicle or a hybrid vehicle. The battery module 32 includes a plurality of battery cells 100 including battery cells 102, 104, 106, 108, 110, a plurality of heat exchangers 120 including heat exchangers 122, 124, and a plurality of frame members 150 including frame members 150, 152, 154.

As shown, the heat exchanger 122 is disposed between the battery cells 102, 104 to extract heat energy from the battery cells 102, 104. Further, the heat exchanger 122 is disposed between the battery cells 106, 108 to extract heat energy from the battery cells 106, 108. The frame members 150, 152 are configured to be removably coupled together and to hold the battery cell 102, the heat exchanger 122, and the battery cell 104 therebetween. The frame members of 152, 154 are configured to be removably coupled together and to hold the battery cell 106, the heat exchanger 124, and the battery cell 108 therebetween.

In one exemplary embodiment, the plurality of battery cells 100 are rectangular-shaped pouch-type lithium-ion battery cells. Of course, other types of battery cells known to those skilled in the art could be utilized. Since each of the plurality of battery cells 100 have a substantially similar structure, only the battery cell 102 will be described in greater detail for purposes of simplicity. As shown, the battery cell 102 has a rectangular-shaped pouch-type body 170 and electrodes 172, 174 extending from the body 170. The battery cell 102 generates a voltage between the electrodes 172, 174.

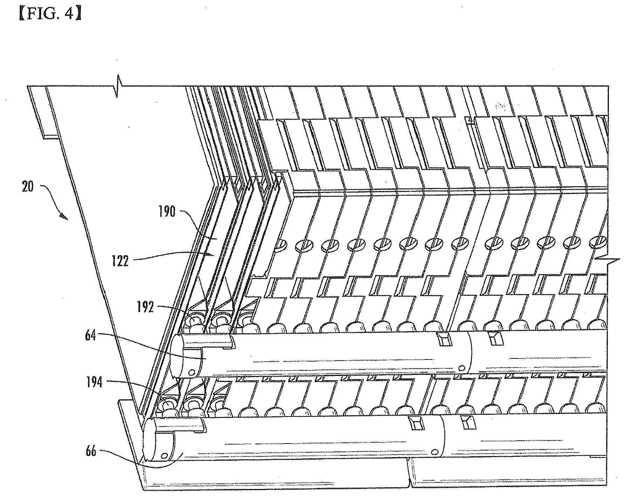

Referring to FIGS. 4 and 6, the plurality of heat exchangers 120 have an identical structure to one another. Accordingly, only the structure of the heat exchanger 122 will be described in greater detail below for purposes of simplicity. The heat exchanger 122 includes a rectangular-shaped body 190 defining an internal flow path, an inlet port 192 for receiving fluid into the body 190 from the manifold assembly 64, and an outlet port 194 for routing fluid from the body 190 into the manifold assembly 66. In one exemplary embodiment, heat exchangers 120 are constructed of aluminum. In another exemplary embodiment, the heat changers 120 are constructed of stainless steel. Of course, other materials known to those skilled in the art could be utilized to construct the heat exchangers 120.

Referring to FIG. 1, the manifold assembly 64 is configured to route cooling fluid into the heat exchangers of the battery modules 30, 32. The manifold assembly 64 includes manifold members 250, 252, a connecting assembly 254 having a connecting fitting 260 and a retaining member 262, and an end cap 270.

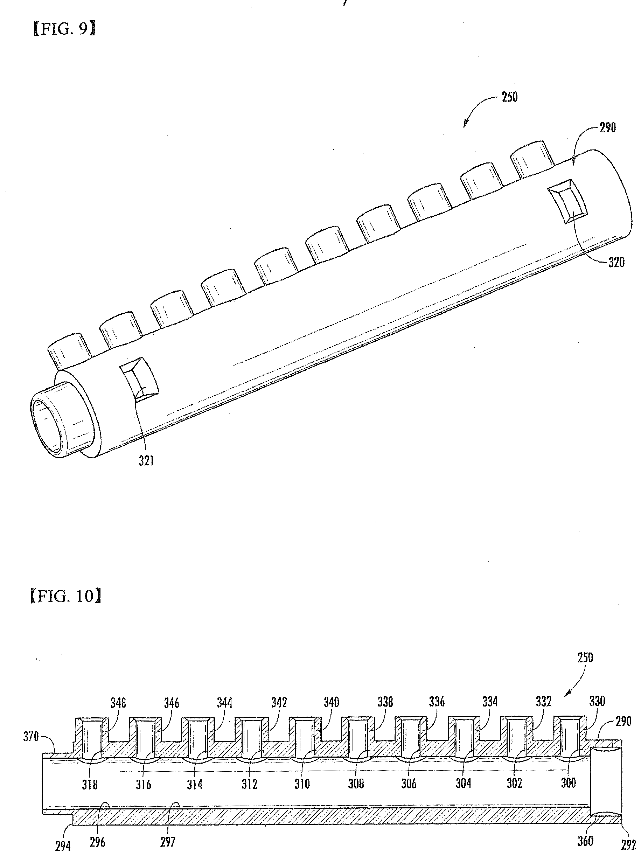

Referring to FIGS. 1 and 7-10, the manifold member 250 is configured to route fluid into the heat exchangers of the battery module 30. The manifold member 250 includes a tubular wall 290, tubular port members 330, 332, 334, 336, 338, 340, 342, 344, 346, 348, a sealing member 360, and a male connecting portion 370.

The tubular wall 290 has a first end 292 and a second end 294. In one exemplary embodiment, the tubular wall 290 is constructed of a plastic, such as polyethylene or polypropylene for example. The tubular wall 290 includes an inner surface 297 defining a central aperture 296 extending a longitudinal length of the tubular wall 290 from the first end 292 to the second end 294. The tubular wall 290 also has a plurality of apertures 300, 302, 304, 306, 308, 310, 312, 314, 316, 318 extending therethrough. Further, the tubular wall 290 has notches 320, 321, 322, 324 the extending therein.

The tubular port members 330-348 are disposed on the tubular wall 290 over the apertures 300-318, respectively. In one exemplary embodiment, the tubular port members 330-348 are constructed of an elastomer, such as at least one styrene, ethylene, butylene, propylene, and diene for example. Of course, other types of elastomers known to those skilled in the art could be utilized to construct the tubular port members 330-348. The tubular port members 330-348 are further removably coupled to inlet ports on the heat exchangers in the battery module 30. An advantage of utilizing the tubular port members 330-348 constructed of an elastomer is that the tubular port members 330-348 can be easily removably coupled to the inlet ports of the heat exchangers and forms a fluid-tight seal with the inlet ports.

Referring to FIGS. 1, 8 and 10, the sealing member 360 is disposed on a portion of the inner surface 297 proximate to the first end 292. In one exemplary embodiment, the sealing member 360 is constructed of an elastomer, such as at least one styrene, ethylene, butylene, propylene, and diene for example. Of course, other types of elastomers known to those skilled in the art could be utilized to construct the sealing member 360. An advantage of utilizing the sealing member 360 constructed of an elastomer is that the sealing member 360 can be easily removably coupled to the connecting fitting 260 of the connecting assembly 254 and forms a fluid-tight seal with the connecting fitting 260.

The male connecting portion 370 extends from the second end 294 and is configured to engage the manifold member 252 in order to couple the manifold member 250 to the manifold member 252. The male connecting portion 370 is constructed of a plastic such as polyethylene or polypropylene for example.

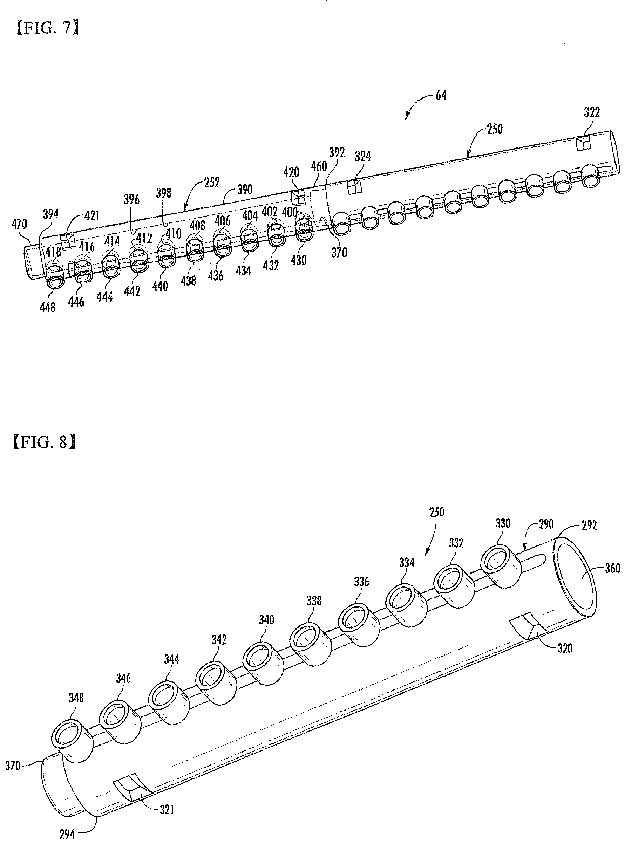

Referring to FIGS. 1 and 7, the manifold member 252 is coupled to the manifold member 250 and fluidly communicates with the manifold member 250. The manifold member 252 is configured to route fluid into the heat exchangers of the battery module 32. The manifold member 252 has an identical structure as the manifold member 250 that decreases component costs. The manifold member 252 includes a tubular wall 390, tubular port members 430, 432, 434, 436, 438, 440, 442, 444, 446, 448, a sealing member 460, and a male connecting portion 470.

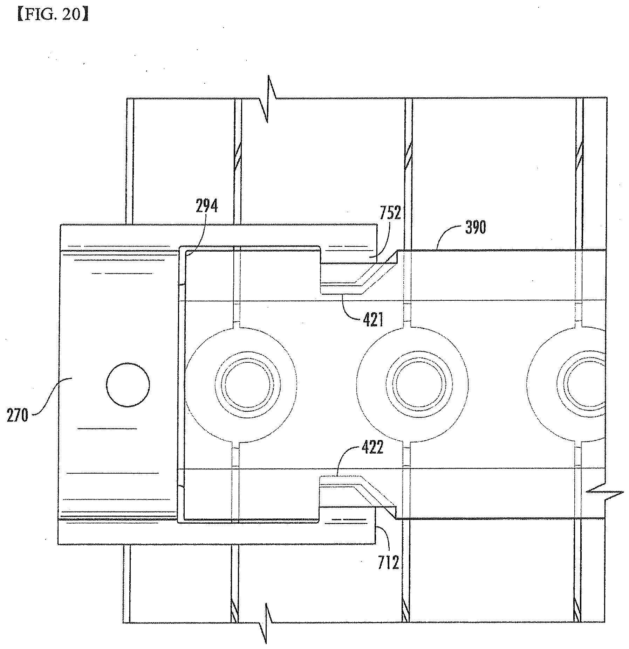

The tubular wall 390 has a first end 392 and a second end 394. In one exemplary embodiment, the tubular wall 390 is constructed of a plastic such as polyethylene or polypropylene for example. The tubular wall 390 includes an inner surface 398 defining a central aperture 396 extending a longitudinal length of the tubular wall 390 from the first end 392 to the second end 394. The tubular wall 390 also has a plurality of apertures 400, 402, 404, 406, 408, 410, 412, 414, 416, 418 extending therethrough. Further, the tubular wall 390 has notches 420, 421, 422 (see FIG. 20), and one other notch that is not shown, extending therein.

The tubular port members 430-448 are disposed on the tubular wall 390 over the apertures 400-418, respectively. In one exemplary embodiment, the tubular port members 430-448 are constructed of an elastomer such as at least one styrene, ethylene, butylene, propylene, and diene for example. Of course, other types of elastomers known to those skilled in the art could be utilized to construct the tubular port members 430-448. The tubular port members 430-448 are further removably coupled with inlet ports on the heat exchangers in the battery module 32. An advantage of utilizing the tubular port members 430-448 constructed of an elastomer is that the tubular port members 430-448 can be easily removably coupled to the inlet ports of the heat exchangers and form a fluid-tight seal with the inlet ports.

The sealing member 460 is disposed on a portion of the inner surface 397 proximate to the first end 392. In one exemplary embodiment, the sealing member 460 is constructed of an elastomer such as at least one styrene, ethylene, butylene, propylene, and diene for example. Of course, other types of elastomers known to those skilled in the art could be utilized to construct the sealing member 460. An advantage of utilizing the sealing member 460 constructed of an elastomer is that the sealing member 460 can be easily removably coupled against the male connecting portion 370 of the manifold member 250 to form a fluid-tight seal with the male connecting portion 370.

The male connecting portion 470 extends from the second end 394 and is configured to engage the end cap 270 in order to couple the manifold member 252 to the end cap 270. The male connecting portion 470 is constructed of a plastic, such as polyethylene or polypropylene for example.

Referring to FIG. 7, when coupling the manifold members 250, 252 together, the male connecting portion 370 of the manifold member 250 is removably coupled to the second end 392 of the manifold member 252 within the central aperture 396 such that the sealing member 460 of the manifold member 252 contacts an outer surface of the male connecting portion 370 and forms a fluid-tight seal between the manifold members 250, 252.

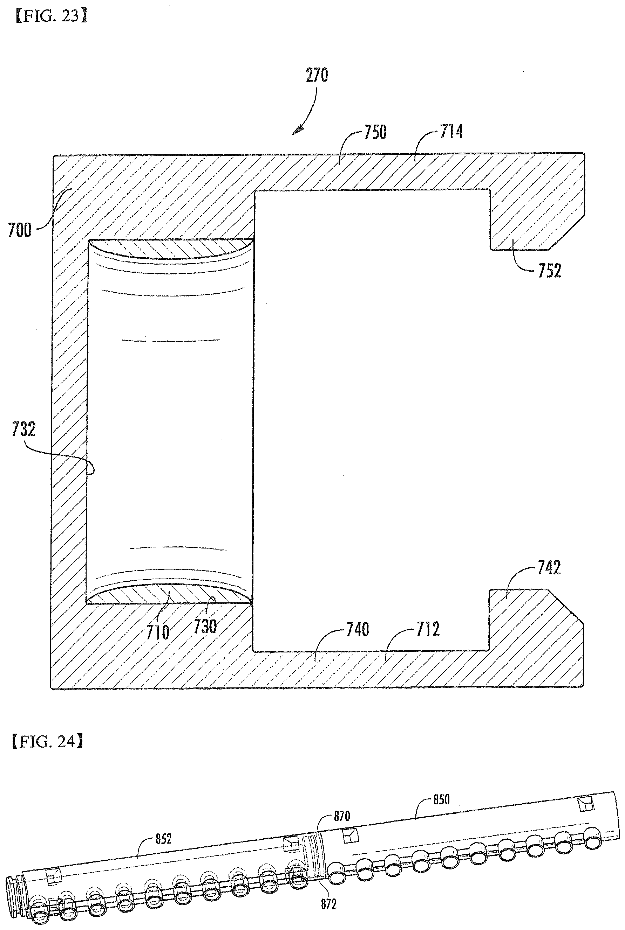

Referring to FIG. 24, in an alternative embodiment, the manifold members 850, 852 having an identical structure can replace the manifold members 250, 252, respectively. The primary difference between the manifold member 850 and the manifold member 250 is that the manifold member 850 has a male connecting portion 870 with a circumferential groove therein that holds an o-ring 872 therein. The o-ring 872 contacts an inner surface of the manifold member 852 to form a fluid-tight seal between the manifold members 850, 852.

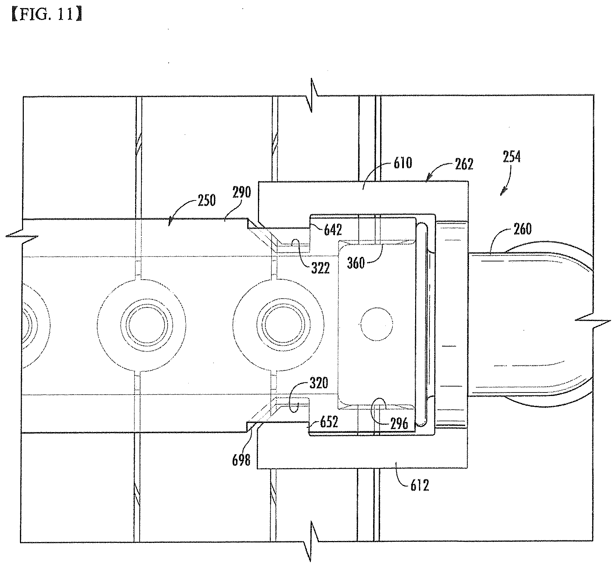

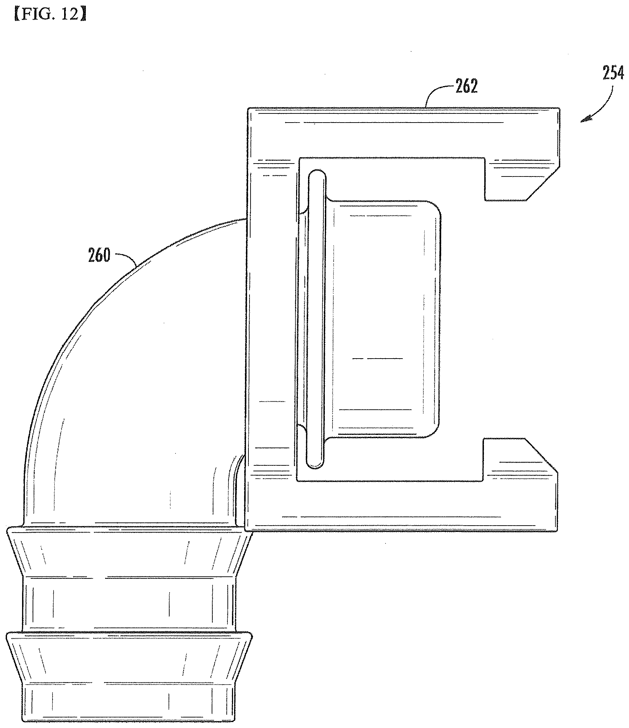

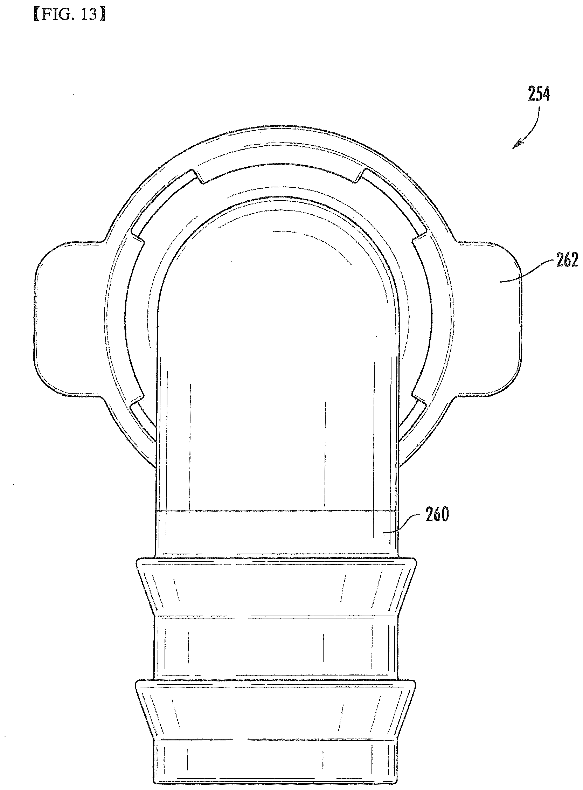

Referring to FIGS. 1, 2 and 11-13, the connecting assembly 254 is provided to couple to both the manifold member 250 of the manifold assembly 64 and the conduit 70 thus allowing fluid to flow from the conduit 70 through the connecting assembly 254 into the manifold member 250. The connecting assembly 254 includes the connecting fitting 260 and the retaining member 262. In one exemplary embodiment, the connecting fitting 260 and the retaining member 262 are constructed from plastic. Of course, in alternative embodiments, the connecting fitting 260 and the retaining member 262 could be constructed from other materials known to those skilled in the art.

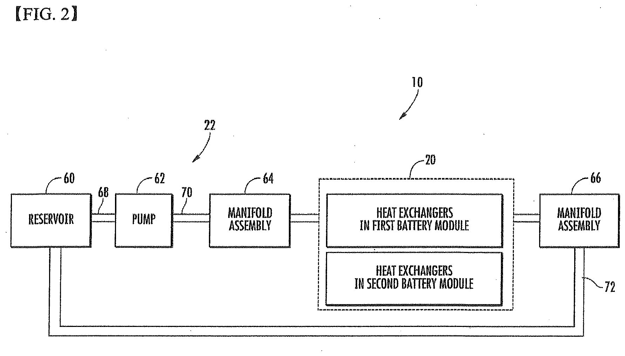

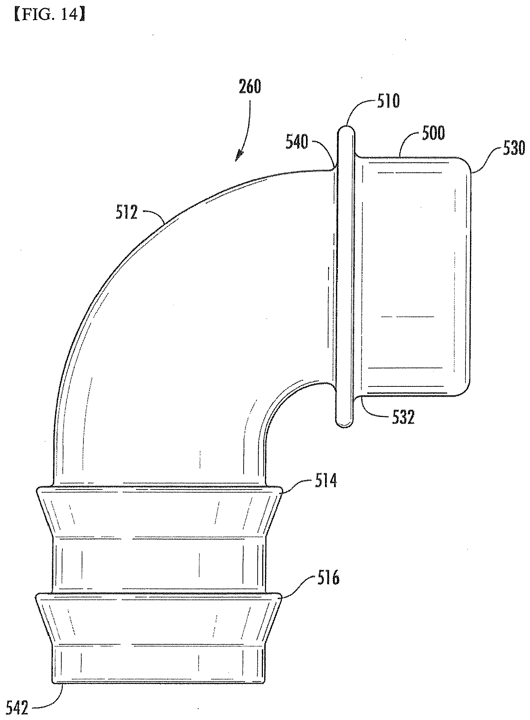

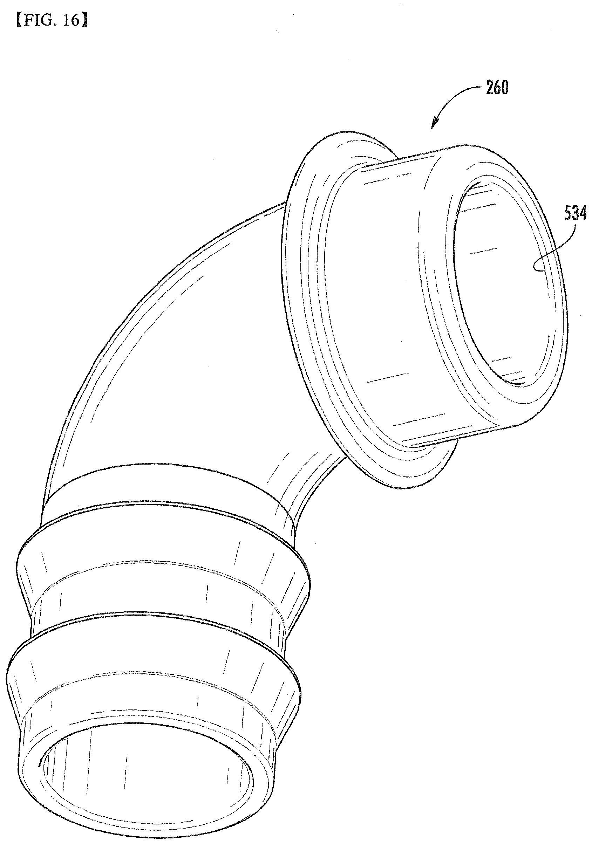

Referring to FIGS. 1, 14 and 16, the connecting fitting 260 includes a tubular coupling portion 500, an abutment ring 510, and arcuate-shaped tubular body 512, and ledges 514, 516. The tubular coupling portion 500 includes a first end 530 and a second end 532. The tubular coupling portion 500 further includes a central aperture 534 extending from the first end 530 to the second end 532. The abutment ring 510 is disposed around an outer surface of the tubular coupling portion 500 a predetermined distance from the first end 530 of the portion 500. The arcuate-shaped tubular body 512 has a first end 540 and a second end 542 and a central aperture 535 extending from the first end 540 to the second end 542 that fluidly communicates with the central aperture 534. In one exemplary embodiment, the arcuate-shaped tubular body 512 has a 90° bend therein. An advantage of the 90° bend is that conduits disposed relatively close and substantially parallel to an outer surface of the battery module 30 can be easily coupled to the tubular coupling portion 500 of the connecting fitting 260, which is further coupled to the manifold 250. Of course, in alternative embodiments, the body 512 could have at another angle or no bend therein. The ledges 514, 516 are configured to removably engage an inner surface of the conduit 70 (see FIG. 2) to form a fluid tight seal with the conduit 70. The ledges 514, 516 extend outwardly from an outer surface of the arcuate-shaped tubular body 512 and extend circumferentially around the body 512. Further, the ledge 516 is disposed proximate to the second end 542 of the body 512, and the ledge 514 is disposed between the ledge 516 and the first end 540 of the body 512.

Referring to FIGS. 2, 11 and 14, the tubular coupling portion 500 is disposed in the central aperture 296 of the tubular wall 290 of the manifold member 250 and contacts the sealing member 360 to form a fluid-tight seal. An advantage of this configuration is that the connecting fitting 260 can be rotated within the central aperture 296 to a desired angular position for coupling the conduit 70 to the connecting fitting 260.

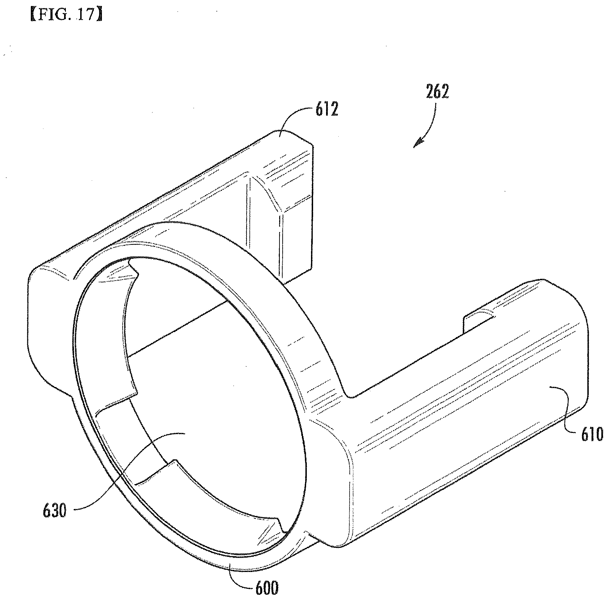

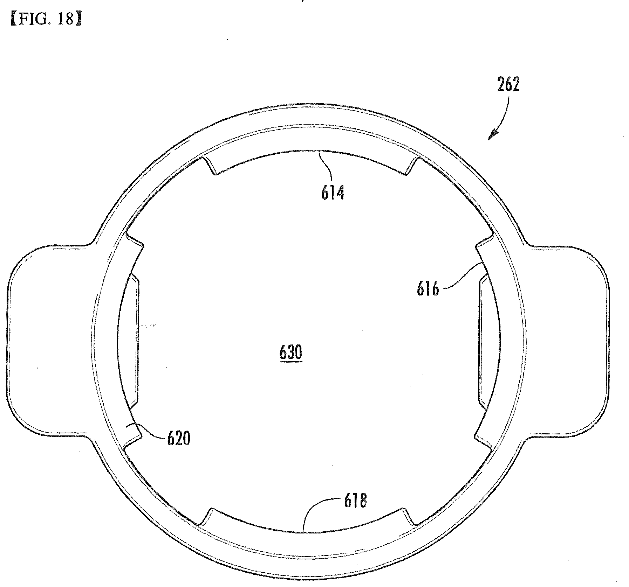

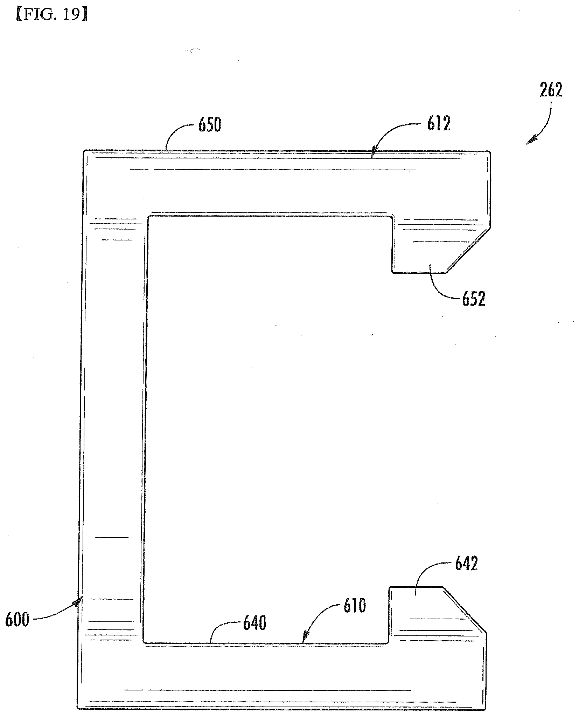

Referring to FIGS. 1, 11-14 and 17-19, the retaining member 262 is provided to removably couple the connecting fitting 260 on an end of the manifold member 250. The retaining member 262 has a ring-shaped portion 600 and first and second finger portions 610, 612 extending in a first direction from the ring-shaped portion 600. The ring-shaped portion 600 defines a central aperture 630 therein. The retaining member 262 further includes tabs 614, 616, 618, 620 that extend inwardly from the ring-shaped portion 600 into the central aperture 630. The first finger portion 610 has an extension portion 640 and a tab portion 642. The extension portion 640 extends away from the ring-shaped portion 600 in the first direction. The tab portion 642 extends away from the extension portion 640 generally perpendicular to the extension portion 640. The second finger portion 612 has an extension portion 650 and a tab portion 652. The extension portion 650 extends away from the ring-shaped portion 600 in the first direction. The tab portion 652 extends away from the extension portion 650 generally perpendicular to the extension portion 650. The ring-shaped portion 600 is slidably disposed on the tubular body 512 of the connecting fitting 254 such that the tubular body 512 is received through the central aperture 630 and the ring-shaped portion 600 is slidably disposed against the abutment ring 510. A diameter of the central aperture 630 is less than an outer diameter of the abutment ring 500. The first and second finger portions 610, 612 are configured to removably engage notches 322, 320, respectively, in the tubular wall 290 of the manifold member 250 to axially retain the connecting fitting 254 on the manifold member 250. In particular, the tab portions 642, 652 of the finger portions 610, 612 removably engage the notches 322, 320, respectively in the tubular wall 290 of the manifold member 250 to axially retain the connecting fitting 254 on the manifold member 250. In one exemplary embodiment, the retaining member 262 is constructed of plastic. Of course, other materials known to those skilled in the art could be utilized to construct the retaining member 262. An advantage of utilizing finger portions 610, 612 constructed of plastic is that the finger portions 610, 612 can be slightly bent when rotating the finger portions 610, 612 about an outer surface of the tubular wall 290 until the finger portions 610, 612 are seated in the notches 322, 320, respectively.

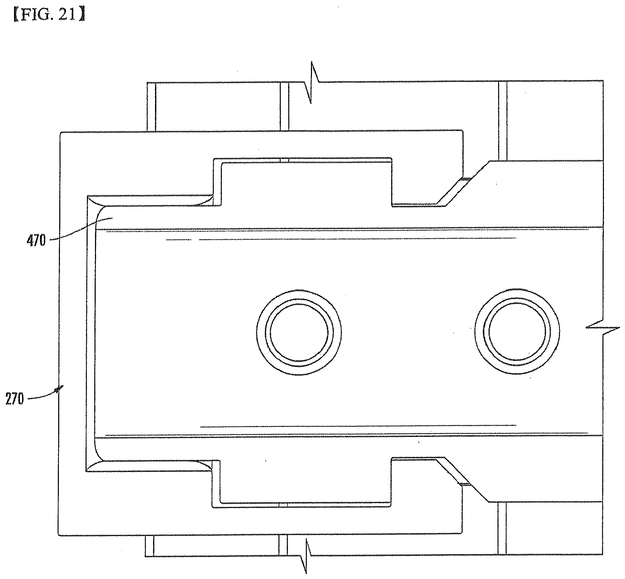

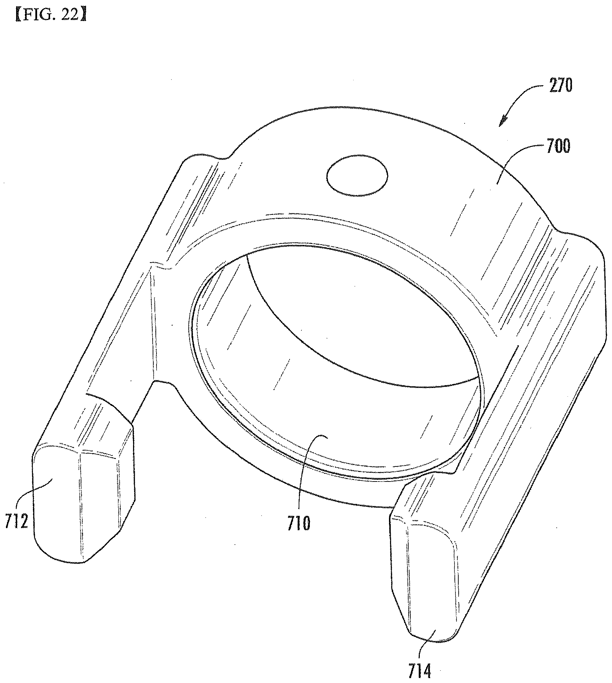

Referring to FIGS. 1 and 20-23, the end cap 270 is configured to be coupled to the male connecting portion 470 and the end 294 of the tubular wall 290 of the manifold member 250 to fluidly seal an opening in the male connecting portion 470. In one exemplary embodiment, the end cap 270 is constructed of plastic. Of course, in alternative embodiments, the end cap 270 could be constructed of other materials known to those skilled in the art. The end cap 270 includes a circular-shaped body 700, a sealing member 710, and the first and second finger portions 712, 714. The circular-shaped body 700 has an inner surface 730 defining an aperture 732 that extends into the circular-shaped body 700 but not completely through the circular-shaped body 700. The sealing member 710 is disposed on at least a portion of the inner surface 730 of the circular-shaped body 700. The first and second finger portions 712, 714 extend in a first direction from the circular-shaped body 700 that are configured to removably engage first and second notches 422, 421 in the tubular wall 390 such that the inner surface 730 contacts an outer surface of the male connecting portion 470 and the end cap 270 is removably attached to the male connecting portion 470 and the tubular wall 390. The first finger portion 712 has an extension portion 740 and a tab portion 742. The extension portion 740 extends away from the circular-shaped body 700 in the first direction. The tab portion 742 extends away from the extension portion 740 generally perpendicular to the extension portion 740. The second finger portion 714 has an extension portion 750 and a tab portion 752. The extension portion 750 extends away from the circular-shaped body 700 in the first direction. The tab portion 752 extends away from the extension portion 750 generally perpendicular to the extension portion 750. Referring to FIG. 23, the first and second finger portions 712, 714 are centered on a plane that bisects the circular-shaped body 700 into two-equal sized regions, one of which is shown in FIG. 23. Also, the sealing member 710 is constructed of an elastomer, such as at least one of styrene, ethylene, butylene, propylene, and diene for example. An advantage of utilizing finger portions 712, 714 constructed of plastic is that the finger portions 712, 714 can be slightly bent when rotating the finger portions 712, 714 about an outer surface of the tubular wall 390 until the finger portions 712, 714 are seated in the notches 422, 421, respectively.

Referring to FIG. 1, during operation as discussed above, the manifold assembly 64 directs fluid into heat exchangers in the battery modules 30, 32 for cooling battery cells in the battery modules 30, 32.

Referring to FIGS. 1 and 2, the manifold assembly 66 is provided to receive fluid from outlet ports in the heat exchangers in the battery modules 30, 32 and to route the fluid to the reservoir 60 via the conduit 72. The manifold assembly 66 includes manifold members 850, 852, a connecting assembly 854 having a connecting fitting 860 and a retaining member 862, and an end cap 870. The manifold members 850, 852 have an identical structure as the manifold members 250, 252, respectively. The manifold members 850, 852 are coupled to outlet ports of the heat exchangers in the battery modules 30, 32, respectively. Also, the end cap 870 has an identical structure as the end cap 270.

### [INDUSTRIAL APPLICABILITY]

The above-described battery system and manifold assembly provide a substantial advantage over other systems. In particular, the battery system and manifold assembly provide a technical effect of utilizing a manifold member and a connecting fitting that be easily removably coupled to each other to form a fluid-tight seal with one another. Further, the manifold member can be easily removably coupled to ports of the heat exchangers to form a fluid-tight seal with the heat exchangers.

Also, the end cap provides a technical effect of being easily coupled to a tubular wall utilizing first and second finger portions and sealing the end of the tubular wall utilizing an internal sealing member.

While the invention has been described with reference to exemplary embodiments, it will be understood by those skilled in the art that various changes may be made and equivalents may be substituted for elements thereof without departing from the scope of the invention. Therefore, it is intended that the invention not be limited to the particular embodiment disclosed for carrying this invention, but that the invention will include all embodiments falling within the scope of the appended claims. Moreover, the use of the terms, first, second, etc. are used to distinguish one element from another. Further, the use of the terms a, an, etc. do not denote a limitation of quantity, but rather denote the presence of at least one of the referenced items.

## Claims

1. A manifold assembly (64, 66), comprising:
manifold members (250, 252; 850, 852) having an identical structure, each manifold member (250, 252; 850, 852) having a tubular wall (290) with a first end and a second end (292, 294), the tubular wall (290) further having an inner surface (297) defining a first central aperture (296) that extends from the first end (292) to the second end (294), the tubular wall (290) further having a plurality of apertures (300, 302, 304, 306, 308, 310, 312, 314, 316, 318) extending therethrough, each manifold member (250, 252; 850, 852) further having a plurality of tubular port members (330, 332, 334, 336, 338, 340, 342, 344, 346, 348) disposed on the tubular wall (290) over the plurality of apertures (300-318), each manifold member (250, 252; 850, 852) further having a first sealing member (360) disposed on the inner surface (297) proximate to the first end (292), and a male connecting portion (370) extending from the second end (294); and
a connecting fitting (260; 860) having a tubular coupling portion (500), an abutment ring (510), and a tubular body (512), the abutment ring (510) being disposed around an outer surface of the tubular coupling portion (500) a predetermined distance from an end (530) of the tubular coupling portion (500), the tubular coupling portion (500) configured to be removably coupled to the first end (292) of a respective manifold member (250; 850) of the manifold members (250, 252; 850, 852) within the first central aperture (296) such that the first sealing member (360) of said manifold member (250; 850) contacts the outer surface of the tubular coupling portion (500) and the abutment ring (510) abuts against the first end (292) of said manifold member (250; 850), wherein
the tubular body of the connecting fitting (260; 860) is an arcuate-shaped tubular body (512),
the tubular body (512) of the connecting fitting (260; 860) has first and second circumferentially disposed ledges (514, 516) extending outwardly from an outer surface of the tubular body (512), the ledges (514, 516) being configured to removably engage an inner surface of a conduit (70) to form a fluid-tight seal with the conduit (70), and
further comprising an end cap (270) configured to be removably coupled to the male connecting portion (370) of another manifold member (252; 852) of the manifold members (250, 252; 850, 852),
wherein the end cap (270) comprises:
a circular-shaped body (700) having an inner surface (730) defining an aperture (732) that extends into the circular-shaped body (700) but not completely through the circular-shaped body (700);
a second sealing member (710) disposed on at least a portion of the inner surface (730) of the circular-shaped body (700); and
first and second finger portions (712, 714) extending in a first direction from the circular-shaped body (700) configured to removably engage first and second notches (422, 421), respectively, in the tubular wall (290) of the respective manifold member (250, 252; 850, 852), and the inner surface (730) of the circular-shaped body (700) is configured to receive the male connecting portion (370) of the respective manifold member (250, 252; 850, 852) therein, and the second sealing member (710) is configured to contact an outer surface of the male connecting portion (370).

2. The manifold assembly (64, 66) of claim 1, wherein the arcuate-shaped tubular body (512) has a 90 degree bend therein.

3. The manifold assembly (64, 66) of claim 1, further comprising a retaining member (262; 862) configured to removably hold the connecting fitting (260) on the first end (292) of the respective manifold member (250, 525; 850, 852).

4. The manifold assembly (64, 66) of claim 3, wherein the retaining member (262; 862) has a ring-shaped portion (600) and first and second finger portions (610, 612) extending in a first direction from the ring-shaped portion (600), the ring-shaped portion (600) defining a second central aperture (630), the ring-shaped portion (600) being slidably disposed on the tubular body (512) of the connecting fitting (260; 860) such that the tubular body (512) is received through the second central aperture (630) and the ring-shaped portion (600) is slidably disposed against the abutment ring (510), a diameter of the second central aperture (630) being less than a diameter of the abutment ring (510), the first and second finger portions (610, 612) configured to removably engage first and second notches (322, 320), respectively, in the tubular wall (290) of the respective manifold member (250, 252; 850, 852) to fixedly hold the connecting fitting (260; 860) on the manifold member (250, 252; 850, 852).

5. The manifold assembly (64, 66) of claim 1, wherein the tubular wall (290) of the manifold assembly (64, 66) is constructed of plastic.

6. The manifold assembly (64, 66) of claim 5, wherein the plastic is at least one of polyethylene and polypropylene.

7. The manifold assembly (64, 66) of claim 1, wherein the plurality of tubular port members (330-348) of the respective manifold member (250, 252; 850, 852) are constructed of an elastomer.

8. The manifold assembly (64, 66) of claim 7, wherein the elastomer is at least one of styrene, ethylene, butylene, propylene, and diene.

9. The manifold assembly (64, 66) of claim 1, wherein the connecting fitting (260; 860) is constructed of plastic.

10. A battery system (10), comprising:
a plurality of battery cells (100) and a plurality of heat exchangers (120) disposed adjacent to the plurality of battery cells (100); and
the manifold assembly (64, 66) according to any one of claims 1 to 4, the respective manifold member (250, 252; 850, 852) fluidly communicating with the plurality of heat exchangers (120); and
the plurality of tubular port members (330-348) of the respective manifold member (250, 252; 850, 852) being coupled to the plurality of heat exchangers (120) of the plurality of battery cell assemblies.

## Patentansprüche

1. Verteilerbaugruppe (64, 66), umfassend:
Verteilerelemente (250, 252; 850, 852) mit einer identischen Struktur, wobei jedes Verteilerelement (250, 252; 850, 852) eine rohrförmige Wand (290) mit einem ersten Ende und einem zweiten Ende (292, 294) aufweist, wobei die rohrförmige Wand (290) weiter eine Innenfläche (297) aufweist, die eine erste zentrale Öffnung (296) definiert, die sich von dem ersten Ende (292) zu dem zweiten Ende (294) erstreckt, wobei die rohrförmige Wand (290) weiter eine Mehrzahl von Öffnungen (300, 302, 304, 306, 308, 310, 312, 314, 316, 318) aufweist, die sich durch diese erstrecken, wobei jedes Verteilerelement (250, 252; 850, 852) weiter eine Mehrzahl von rohrförmigen Anschlusselementen (330, 332, 334, 336, 338, 340, 342, 344, 346, 348) aufweist, die auf der rohrförmigen Wand (290) über die Mehrzahl von Öffnungen (300-318) angeordnet sind, wobei jedes Verteilerelement (250, 252; 850, 852) weiter ein erstes Dichtungselement (360), das auf der Innenfläche (297) nahe bei dem ersten Ende (292) angeordnet ist, und einen männlichen Verbindungsabschnitt (370), der sich von dem zweiten Ende (294) erstreckt, aufweist; und
ein Anschlussformstück (260; 860), das einen rohrförmigen Kopplungsabschnitt (500), einen Widerlagerring (510) und einen rohrförmigen Körper (512) aufweist, wobei der Widerlagerring (510) um einen vorbestimmten Abstand von einem Ende (530) des rohrförmigen Kopplungsabschnitts (500) entfernt um eine Außenfläche des rohrförmigen Kopplungsabschnitts (500) angeordnet ist, wobei der rohrförmige Kopplungsabschnitt (500) dazu konfiguriert ist, lösbar an das erste Ende (292) eines entsprechenden Verteilerelements (250; 850) der Verteilerelemente (250, 252; 850, 852) innerhalb der ersten zentralen Öffnung (296) gekoppelt zu sein, sodass das erste Dichtungselement (360) des Verteilerelements (250; 850) die Außenfläche des rohrförmigen Kopplungsabschnitts (500) kontaktiert und der Anschlussring (510) an das erste Ende (292) des Verteilerelements (250; 850) anstößt, wobei
der rohrförmige Körper des Anschlussformstücks (260; 860) ein bogenförmiger rohrförmiger Körper (512) ist,
der rohrförmige Körper (512) des Anschlussformstücks (260; 860) erste und zweite umlaufend angeordnete Absätze (514, 516) aufweist, die sich von einer Außenfläche des rohrförmigen Körpers (512) nach außen erstrecken, wobei die Absätze (514, 516) dazu konfiguriert sind, eine Innenfläche einer Rohrleitung (70) lösbar in Eingriff zu nehmen, um ein fluiddichte Abdichtung mit der Rohrleitung (70) zu bilden, und
weiter eine Abschlusskappe (270) umfassend, die dazu konfiguriert ist, lösbar an den männlichen Verbindungsabschnitt (370) eines weiteren Verteilerelements (252; 852) der Verteilerelemente (250, 252; 850, 852) gekoppelt zu sein,
wobei die Abschlusskappe (270) umfasst:
einen kreisförmigen Körper (700) mit einer Innenfläche (730), die eine Öffnung (732) definiert, die sich in den kreisförmigen Körper (700) hinein, jedoch nicht vollständig durch den kreisförmigen (700) hindurch erstreckt;
ein zweites Dichtungselement (710), das auf zumindest einem Abschnitt der Innenfläche (730) des kreisförmigen Körpers (700) angeordnet ist; und
erste und zweite Fingerabschnitte (712, 714), die sich in einer ersten Richtung von dem kreisförmigen Körper (700) erstrecken und dazu konfiguriert sind, erste bzw. zweite Nuten (422, 421) in der rohrförmigen Wand (290) des entsprechenden Verteilerelements (250, 252; 850, 852) lösbar in Eingriff zu nehmen, und die Innenwand (730) des kreisförmigen Körpers (700) dazu konfiguriert ist, den männlichen Verbindungsabschnitt (370) des entsprechenden Verteilerelements (250, 252; 850, 852) darin aufzunehmen, und das zweite Dichtungselement (710) dazu konfiguriert ist, eine Außenfläche des männlichen Verbindungsabschnitts (370) zu kontaktieren.

2. Verteilerbaugruppe (64, 66) nach Anspruch 1, wobei der bogenförmige rohrförmige Körper (512) eine 90°-Biegung darin aufweist.

3. Verteilerbaugruppe (64, 66) nach Anspruch 1, die weiter ein Halteelement (262; 862) aufweist, das dazu konfiguriert ist, das Anschlussformstück (260) lösbar auf dem ersten Ende (292) des entsprechenden Verteilerelements (250, 525; 850, 852) zu halten.

4. Verteilerbaugruppe (64, 66) nach Anspruch 3, wobei das Halteelement (262; 862) einen ringförmigen Abschnitt (600) und erste und zweite Fingerabschnitte (610, 612), die sich in einer ersten Richtung von dem ringförmigen Abschnitt (600) erstrecken, aufweist, wobei der ringförmige Abschnitt (600) eine zweite zentrale Öffnung (630) definiert, wobei der ringförmige Abschnitt (600) verschiebbar auf dem rohrförmigen Körper (512) des Anschlussformstücks (260; 860) angeordnet ist, sodass der rohrförmige Körper (512) durch die zweite zentrale Öffnung (630) aufgenommen wird und der ringförmige Abschnitt (600) verschiebbar wider den Widerlagerring (510) angeordnet ist, wobei ein Durchmesser der zweiten zentralen Öffnung (630) kleiner als ein Durchmesser des Widerlagerrings (510) ist, wobei die ersten und zweiten Fingerabschnitte (610, 612) dazu konfiguriert sind, erste bzw. zweite Nuten (322, 320) in der rohrförmigen Wand (290) des entsprechenden Verteilerelements (250, 252; 850, 852) lösbar in Eingriff zu nehmen, um das Anschlussformstück (260; 860) fest auf dem Verteilerelement (250, 252; 850, 852) zu halten.

5. Verteilerbaugruppe (64, 66) nach Anspruch 1, wobei die rohrförmige Wand (290) der Verteilerbaugruppe (64, 66) aus Kunststoff aufgebaut ist.

6. Verteilerbaugruppe (64, 66) nach Anspruch 5, wobei der Kunststoff zumindest eines aus Polyethylen und Polypropylen ist.

7. Verteilerbaugruppe (64, 66) nach Anspruch 1, wobei die Mehrzahl von rohrförmigen Anschlusselementen (330-348) des entsprechenden Verteilerelements (250, 252; 850, 852) aus einem Elastomer aufgebaut sind.

8. Verteilerbaugruppe (64, 66) nach Anspruch 7, wobei das Elastomer zumindest eines von Styrol, Ethylen, Butylen, Propylen und Dien ist.

9. Verteilerbaugruppe (64, 66) nach Anspruch 1, wobei das Anschlussformstück (260; 860) aus Kunststoff aufgebaut ist.

10. Batteriesystem (10), umfassend:
eine Mehrzahl von Batteriezellen (100) und eine Mehrzahl von Wärmetauschern (120), die angrenzend an die Mehrzahl von Batteriezellen (100) angeordnet sind; und
die Verteilerbaugruppe (64, 66) nach einem der Ansprüche 1 bis 4, wobei das entsprechende Verteilerelement (250, 252; 850, 852) mit der Mehrzahl von Wärmetauschern (120) in Fluidkommunikation steht; und
die Mehrzahl von rohrförmigen Anschlusselementen (330-348) des entsprechenden Verteilerelements (250, 252; 850, 852) an die Mehrzahl von Wärmetauschern (120) der Mehrzahl von Batteriezellenbaugruppen gekoppelt ist.

## Revendications

1. Ensemble collecteur (64, 66), comprenant :
des éléments de collecteur (250, 252 ; 850, 852) ayant une structure identique, chaque élément de collecteur (250, 252 ; 850, 852) ayant une paroi tubulaire (290) avec une première extrémité et une seconde extrémité (292, 294), la paroi tubulaire (290) ayant en outre une surface interne (297) définissant une première ouverture centrale (296) qui s'étend de la première extrémité (292) à la seconde extrémité (294), la paroi tubulaire (290) ayant en outre une pluralité d'ouvertures (300, 302, 304, 306, 308, 310, 312, 314, 316, 318) s'étendant à travers elle, chaque élément de collecteur (250, 252 ; 850, 852) ayant en outre une pluralité d'éléments formant orifice tubulaire (330, 332, 334, 336, 338, 340, 342, 344, 346, 348) disposés sur la paroi tubulaire (290) au-dessus de la pluralité d'ouvertures (310-318), chaque élément de collecteur (250, 252 ; 850, 852) ayant en outre un premier élément d'étanchéité (360) disposé sur la surface interne (297) à proximité de la première extrémité (292), et une partie de raccordement mâle (370) s'étendant à partir de la seconde extrémité (294) ; et
un accessoire de raccordement (260; 860) ayant une partie de couplage tubulaire (500), un anneau de butée (510) et un corps tubulaire (512), l'anneau de butée (510) étant disposé autour d'une surface externe de la partie de couplage tubulaire (500) à une distance prédéterminée d'une extrémité (530) de la partie de couplage tubulaire (500), la partie de couplage tubulaire (500) étant configurée pour être couplée de manière amovible à la première extrémité (292) d'un élément de collecteur (250 ; 850) respectif des éléments de collecteur (250, 252 ; 850, 852) à l'intérieur de la première ouverture centrale (296) de telle sorte que le premier élément d'étanchéité (360) dudit élément de collecteur (250 ; 850) entre en contact avec la surface externe de la partie de couplage tubulaire (500) et que l'anneau de butée (510) vienne en butée contre la première extrémité (292) dudit élément de collecteur (250 ; 850), dans lequel
le corps tubulaire de l'accessoire de raccordement (260 ; 860) est un corps tubulaire de forme arquée (512),
le corps tubulaire (512) de l'accessoire de raccordement (260 ; 860) a des premier et second rebords disposés de manière circonférentielle (514, 516) s'étendant vers l'extérieur à partir d'une surface externe du corps tubulaire (512), les rebords (514, 516) étant configurés pour se mettre en prise de manière amovible avec une surface interne d'un conduit (70) pour former un joint étanche au fluide avec le conduit (70), et
comprenant en outre un capuchon d'extrémité (270) configuré pour être couplé de manière amovible à la partie de raccordement mâle (370) d'un autre élément de collecteur (252 ; 852) des éléments de collecteur (250, 252 ; 850, 852),
dans lequel le capuchon d'extrémité (270) comprend :
un corps de forme circulaire (700) ayant une surface interne (730) définissant une ouverture (732) qui s'étend dans le corps de forme circulaire (700), mais pas complètement à travers le corps de forme circulaire (700) ;
un second élément d'étanchéité (710) disposé sur au moins une partie de la surface interne (730) du corps de forme circulaire (700) ; et
des première et seconde parties formant doigt (712, 714) s'étendant dans une première direction à partir du corps de forme circulaire (700) configurées pour se mettre en prise de manière amovible avec des première et seconde encoches (422, 421), respectivement, dans la paroi tubulaire (290) de l'élément de collecteur (250, 252 ; 850, 852) respectif, et la surface interne (730) du corps de forme circulaire (700) est configurée pour recevoir la partie de raccordement mâle (370) de l'élément de collecteur (250, 252 ; 850, 852) respectif, et le second élément d'étanchéité (710) est configuré pour entrer en contact avec une surface externe de la partie de raccordement mâle (370).

2. Ensemble collecteur (64, 66) selon la revendication 1, dans lequel le corps tubulaire de forme arquée (512) présente une courbure à 90 degrés.

3. Ensemble collecteur (64, 66) selon la revendication 1, comprenant en outre un élément de retenue (262; 862) configuré pour maintenir de manière amovible l'accessoire de raccordement (260) sur la première extrémité (292) de l'élément de collecteur (250, 525 ; 850, 852) respectif.

4. Ensemble collecteur (64, 66) selon la revendication 3, dans lequel l'élément de retenue (262; 862) a une partie de forme annulaire (600) et des première et seconde parties formant doigt (610, 612) s'étendant dans une première direction à partir de la partie de forme annulaire (600), la partie de forme annulaire (600) définissant une seconde ouverture centrale (630), la partie de forme annulaire (600) étant disposée de manière coulissante sur le corps tubulaire (512) de l'accessoire de raccordement (260 ; 860) de telle sorte que le corps tubulaire (512) est reçu à travers la seconde ouverture centrale (630) et que la partie de forme annulaire (600) est disposée de manière coulissante contre l'anneau de butée (510), un diamètre de la seconde ouverture centrale (630) étant inférieur à un diamètre de l'anneau de butée (510), les première et seconde parties formant doigt (610, 612) étant configurées pour se mettre en prise de manière amovible avec des première et seconde encoches (322, 320), respectivement, dans la paroi tubulaire (290) de l'élément de collecteur (250, 252 ; 850, 852) respectif pour maintenir de manière fixe l'accessoire de raccordement (260; 860) sur l'élément de collecteur (250, 252 ; 850, 852).

5. Ensemble collecteur (64, 66) selon la revendication 1, dans lequel la paroi tubulaire (290) de l'ensemble collecteur (64, 66) est constituée de plastique.

6. Ensemble collecteur (64, 66) selon la revendication 5, dans lequel le plastique est au moins l'un de polyéthylène et polypropylène.

7. Ensemble collecteur (64, 66) selon la revendication 1, dans lequel la pluralité d'éléments formant orifice tubulaire (330-348) de l'élément de collecteur (250, 252 ; 850, 852) respectif sont constitués d'un élastomère.

8. Ensemble collecteur (64, 66) selon la revendication 7, dans lequel l'élastomère est au moins l'un de styrène, éthylène, butylène, propylène et diène.

9. Ensemble collecteur (64, 66) selon la revendication 1, dans lequel l'accessoire de raccordement (260 ; 860) est constitué de plastique.

10. Système de batterie (10), comprenant :
une pluralité de cellules de batterie (100) et une pluralité d'échangeurs de chaleur (120) disposés de manière adjacente par rapport à la pluralité de cellules de batterie (100) ; et
l'ensemble collecteur (64, 66) selon l'une quelconque des revendications 1 à 4, l'élément de collecteur (250, 252; 850, 852) respectif communiquant de manière fluidique avec la pluralité d'échangeurs de chaleur (120) ; et
la pluralité d'éléments formant orifice tubulaire (330-348) de l'élément de collecteur (250, 252 ; 850, 852) respectif étant couplés à la pluralité d'échangeurs de chaleur (120) de la pluralité d'ensembles de cellules de batterie.
